# EUROPÄISCHE PATENTSCHRIFT

(11) **EP 3 939 683 B1**
(45) Veröffentlichungstag und Bekanntmachung des Hinweises auf die Patenterteilung: **30.04.2025**
(21) Anmeldenummer: 21185019.3
(22) Anmeldetag: 12.07.2021
(51) Int. Cl.: B01D 19/00, F24D 19/08, C02F 1/20, F25B 43/04, B01D 3/00

(54) **ALKAN-STRIPPUNG AUS HEIZ/SOLEKREISLAUF**
ALKANE STRIPPING FROM HEAT/BRINE CIRCUIT
STRIPPAGE DES ALCANES DU CIRCUIT DE CHAUFFAGE/SAUMURE

(30) Priorität: 15.07.2020 DE 102020118605
(43) Veröffentlichungstag der Anmeldung: 19.01.2022
(73) Patentinhaber: Vaillant GmbH, 42859 Remscheid (DE)
(72) Erfinder: Wohlfeil, Arnold, 42799 Leichlingen (DE)
(74) Vertreter: Popp, Carsten

(56) Entgegenhaltungen:
- EP-A1- 3 747 532
- EP-A1- 3 764 001
- EP-A1- 3 800 263
- EP-A1- 3 882 526
- DE-A1- 102006 015 263
- DE-A1- 102006 056 188
- DE-U1- 9 106 125
- US-A- 5 106 507

## Beschreibung

Die Erfindung betrifft die Abscheidung entzündlicher, alkanhaltiger Gase in einem Heizungskreislauf oder Kühlsolekreislauf. Es ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Eine weitere Quelle sind nicht diffusionsdicht ausgeführte Armaturen und Leitungen, in die aufgrund des Sauerstoff-Partialdruckgefälles zur Umgebungsluft Sauerstoffgas eindiffundieren kann. Dasselbe gilt für Sole-Split-Anlagen, bei denen sich Sole im Heizkreis befindet.

Befindet sich Luft im System, führt dies oftmals zu Funktionsstörungen und Schäden an Anlagenkomponenten durch Korrosionsprozesse. Gerade Bauteile mit Verschleißteilen wie zum Beispiel Umwälzpumpen sind hiervon betroffen. Außerdem werden Umwälzabläufe durch etwaige Luftpolster behindert und die Wärmeverteilung an sich gestört oder sogar unterbrochen. Verbunden sind die Fehlfunktionen dabei oftmals mit Fließ- und Kavitationsgeräuschen. Gebräuchlich sind daher Entlüfter, mit denen solche Luft aus dem System entfernt werden kann. Problematisch werden solche Entlüfter dann, wenn sich nicht nur Luft im System befindet.

In neueren Kältekreisen, zum Beispiel in Wärmepumpen, werden keine Sicherheitskältemittel mehr verwendet, sondern alkanhaltige, entzündliche natürliche Arbeitsfluide wie z.B. R290 und R1270. Deren Arbeitsdruck ist sowohl auf der Wärme aufnehmenden Seite als auch auf der Wärme abgebenden Seite regelmäßig höher als der übliche Druck in Heizkreisläufen. Je nach Schaltung und Betriebsweise können Leckagen im Kondensator oder Verdampfer daher zum Austritt von gasförmigem brennbarem Arbeitsfluid aus dem Kältekreis in den Heiz- oder Solekreislauf führen. Dies würde nachfolgend beim Entlüften dazu führen, dass ein zündfähiges Gemisch austreten könnte. Das darf aus Sicherheitsgründen keinesfalls geschehen. Dasselbe gilt natürlich auch für herkömmliche, brennbare Kältemittel wie z.B. R32, sofern solche noch zur Anwendung gelangen.

Im Stand der Technik verhindert man dies durch Verwendung von doppelwandigen Edelstahl-Wärmetauschern als Kondensatoren und Verdampfer. Im Falle einer Leckage tritt das brennbare Arbeitsfluid in den Zwischenraum der beiden Wandungen ein und wird dort separat abgesaugt und einer Nachbehandlung unterworfen. Diese Nachbehandlung kann auch entfallen, wenn es einen sicheren Weg in die Atmosphäre gibt, bei dem eine Vermischung mit Luft in einer Menge erfolgt, dass sich ein zündfähiges Gemisch nicht bilden kann. Der Zwischenraum beträgt dabei meist nur wenige Zehntelmillimeter. Diese Bauformen sind aber einerseits teuer und andererseits behindern sie den Wärmeübergang, weil der Zwischenraum wie eine Wärmedämmung wirkt, sie verringern also den erreichbaren Wirkungsgrad. Im Übrigen können Leckagen auch beide Wände betreffen.

Weitere Möglichkeiten betreffen die Belüftung der Gehäuse, die Verwendung von Gassensoren mit Abschaltung der Elektronik, Aktivkohle zur Adsorption, Zwangsbelüftungen der Räume und weitere Maßnahmen, wie sie auch die EN 378-1 in ihren Vorschriften nennt. Diese Maßnahmen betreffen aber meist nicht die Heiz-Kühlkreisläufe, sondern die aufgestellten Geräte selbst.

Wünschenswert wäre es deshalb, wenn auf die doppelwandigen Wärmeübertrager verzichtet und im Falle von Leckagen das in den Heiz- oder Solekreislauf eingetretene Arbeitsfluid sicher abgeschieden werden könnte. Das abzuscheidende Arbeitsfluid kann dabei entweder in gelöster Form oder in Form von Gasblasen vorliegen, im Falle von Gasblasen handelt es sich bei sehr kleinen Leckagen dabei um sehr feine Gasblasen.

Hierfür wird vorliegend vom Verfahren der Strippung Gebrauch gemacht, was vor allem im Bereich der Trinkwasseraufbereitung und der Grundwassersanierung Stand der Technik ist. Im Falle der Trinkwasseraufbereitung sei hierbei auf die DE 91 06 125 U1, die DE 10 2006 056 188 A1 und die DE 10 2017 107 143 A1 verwiesen. Meist mit dem Ziel der Entsäuerung, vor allem im Rahmen der Kohlensäure-Strippung und/oder zur Strippung von leichtflüchtigen Substanzen, wie Kohlenwasserstoffen, Lösemitteln oder Radon, wird hierbei Luft von unten in einen mit Trinkwasser gefüllten Behälter gedrückt und oberhalb des Wasserspiegels wieder entnommen.

Die Flüchtigkeit von Kohlenwasserstoffen wird in wässrigen Lösungen durch den Henry-Koeffizienten beschrieben, der stark temperaturabhängig ist. Während es in Trinkwasser oft erwünscht ist, dass der Sauerstoffgehalt hoch und der Kohlendioxidgehalt niedrig ist, muss in Heizkreisläufen der Sauerstoffgehalt möglichst gering sein, um Korrosion zu vermeiden. Aus diesem Grund können die für die Trinkwasserstrippung entwickelten Konzepte für die Entfernung von kohlenwasserstoffhaltigen Kontaminationen des Heizkreiswassers nicht verwendet werden.

Die DE 10 2014 018 844 A1 beschreibt ein Verfahren und eine Vorrichtung zur Waschmittelregenerierung in einer physikalischen Gaswäsche mittels einer Strippung. Die Strippung findet hierbei bei erhöhtem Druck statt. Das abgezogene Gas aus der Gaswäsche und die abgezogene Flüssigkeit werden entspannt, wodurch aus der Flüssigkeit weiteres Gas ausgasen kann. Als Ergebnis dieser Vorrichtung wird eine Flüssigkeit mit einem gelösten Gas und ein von dem gelösten Gas verschiedenes Gas erhalten. Hier vorliegend wird jedoch eine Vorrichtung benötigt, bei der das ganze in der Flüssigkeit enthaltene Gas zuerst ausgetrieben und dann abgeschieden wird. Eine Vorrichtung der in der DE 10 2014 018 844 A1 beschriebenen Art kann daher hier nicht genutzt werden.

Die US 5,106,507 beschreibt ein Verfahren zur Rückgewinnung von kohlenwasserstoffhaltigen Verunreinigungen aus Abwasser. Hierbei wird das Abwasser im Gegenstrom mit einem Strippgas gestrippt, das mit den Kohlenwasserstoffen beladene Strippgas wird in einem Aktivkohlefilterr durch Adsorption von den Kohlenwasserstoffen befreit und ansonsten im Kreislauf gefahren. Von Zeit zu Zeit wird der Aktivkohlefilter mit Dampf regeneriert und die desorbierten Kohlenwasserstoffe werden zurückgewonnen.

Die EP 3 800 263 A1 beschreibt ein biologisches Verfahren zum Alkanabbau, bei dem ein entgaster Teilstrom aus einem Wärmeträgerfluid, welches ein gelöstes Alkan enthält, abgezweigt und so konditioniert wird, dass ein Abbau in einem Bioreaktor erfolgen kann. Das Verfahren eignet sich auch für den mobilen Einsatz zum Dekontaminieren von Heizkreisen und Solekreisen außerhalb der Nutzungszeiten, etwa bei Reparaturen oder Wartungen. Es arbeitet dabei gründlich, aber langsam.

Die US 2009 / 0 241 778 A1 beschreibt ein Verfahren und eine Vorrichtung zur Entfernung von Sauergas aus einem Einsatzgas. Hierzu wird das Sauergas mit einem selektiv wirkenden Waschmittel aus dem Einsatzgas ausgewaschen. Bei der Regeneration der Waschlösung, welche das Sauergas gelöst enthält, werden typischerweise Strippkolonnen verwendet. Um die Regeneration besser durchführen zu können, wird der Druck in der Strippkolonne verringert, oder die Waschlösung wird erhitzt oder es wird Waschmitteldampf zugesetzt. Je besser das Waschmittel das Sauergas absorbiert, desto aufwendiger sind die Regenerationsmaßnahmen. In der technischen Lehre der US 2009 / 0 241 778 A1 wird hierzu ein bereits abgeschiedenes und zurückgeführtes Sauergas als Strippgas in einen Eduktor geleitet, wo die Regeneration der Waschlösung zum wiederverwendbaren Waschmittel erfolgt, welches auf diese Weise im Kreislauf gefahren werden kann.

Dies ist vorliegend nicht sinnvoll, da das alkanhaltige Arbeitsfluid der Kältemaschine typischerweise kaum in der Heizkreisflüssigkeit lösbar ist. Problematisch ist dagegen der Eintrag von Sauerstoff in die Heizkreisflüssigkeit, wenn mit Luft gestrippt werden soll. Aus diesen Gründen sind weder die bekannten Verfahren der Trinkwasserreinigung noch die der industriellen Waschverfahren einsetzbar. Das betrifft daher auch die zum Einsatz kommenden Apparaturen, mit denen die jeweiligen Verfahren durchgeführt werden.

Aufgabe der Erfindung ist es daher, eine Vorrichtung und ein Verfahren zur Abscheidung alkanhaltiger entzündlicher Gase in einem wässrigen Heizungskreislauf oder Kühlsolekreislauf bereitzustellen. Die Aufgabe wird gelöst durch eine Strippvorrichtung für ein wässriges Wärmeträgerfluid der Klima-Heizungs-Lüftungstechnik, aufweisend
- einen Behälter mit zwei Anschlüssen für einen ein Wärmeträgerfluid-führenden Kreislauf,
- Mittel zum Abscheiden von Gasblasen und Trennung von Gasbestandteilen und Wärmeträgerfluid unter Zurückhaltung der Flüssigkeit im Wärmeträgerfluid-führenden Kreislauf aus diesem Wärmeträgerfluid,
- ferner mindestens einen Abzug für abgeschiedene Gasbestandteile, wobei
- eine Zugabevorrichtung für Strippgas vorgesehen ist,
- ein Abzug für Strippgas vorgesehen ist,
wobei
- im oberen Bereich des Behälters eine Aufgabevorrichtung für Wärmeträgerfluid vorgesehen ist,
- im unteren Bereich des Behälters eine Auffangvorrichtung für Wärmeträgerfluid vorgesehen ist,
- die Auffangvorrichtung für Wärmeträgerfluid mit einem Abzug für Wärmeträgerfluid aus dem Behälter verbunden ist,
- der mit einem automatischen Heizkreisentlüfter verbunden ist,
- wobei der automatische Heizkreisentlüfter mit einem Luftabzug verbunden ist.

Automatische Heizkreisentlüfter sind im Stand der Technik gut bekannt. Die DE 10 2006 015 263 A1 beschreibt ein automatisches Entlüftungsventil mit einer Membran, die durchlässig ist für gasförmige Medien. Ein auch für die separate Abtrennung von Luft und ausgasendem Arbeitsfluid aus einem Heizungskreislauf geeigneter automatischer Heizkreisentlüfter wird in der EP 3 747 532 A1 beschrieben. Solche automatischen Heizkreisentlüfter sind wenige Zentimeter groß und apparativ nicht vergleichbar mit üblichen großindustriellen Gasabscheidern.

In praktischen Anwendungen der Heizungs-Klima-Lüftungstechnik wird es auf diese Weise möglich, durch Kombination günstiger Vorrichtungen in den Dimensionen von üblichen Laborausrüstungen mit bekannt zuverlässigen typischen Ausstattungen bekannter Heizungskreisläufe das Sicherheitsproblem durch mögliche Leckagen ohne Wirkungsgradverluste aufgrund doppelwandig ausgeführter Edelstahlwärmetauscher zu lösen.

In einer Ausgestaltung kann vorgesehen werden, dass der Luftabzug und der Abzug für Strippgas zusammengeführt werden, sofern ein gefahrloser Abzug ins Freie vorhanden ist.

Hierbei durchläuft der gesamte Wärmeträgerfluidstrom stets die Strippung. Es kann jedoch sinnvoll sein, diese Strippung nur für einen Teilstrom oder auch nur von Zeit zu Zeit oder erst nach einer Leckagedetektion durchzuführen. In diesen Fällen wird die Strippung im Bypass betrieben. Ebenfalls denkbar ist, die Strippung in einer mobilen Einheit durchzuführen und nur anlässlich Wartungen oder besonderen Veranlassungen laufen zu lassen.

Weitere Ausgestaltungen betreffen diese Bypässe, bei denen aus dem Hauptstrom des Wärmeträgerfluids ein Teilstrom abgezweigt wird und im Anschluss an den Strippvorgang wieder mit dem Hauptstrom zusammengeführt wird.

In einer dieser Ausgestaltungen ist daher vorgesehen, dass nach dem Abzweig des Teilstroms eine Druckerhöhungspumpe vorgesehen wird, die die flüssigkeitsseitigen Druckverluste bis zur anschließenden Zusammenführung mit dem Hauptstrom des Wärmeträgerfluids ausgleicht.

Praktisch bedeutet dies, dass die Strippung unter Druck ausgeführt wird. Das hat den Vorteil, dass die verwendeten Apparate klein und handlich sind, aber den Nachteil, dass in der Druckerhöhungspumpe möglicherweise Kavitation zu befürchten ist, wenn die Menge an gasförmigem Arbeitsfluid im Wärmeträgerfluid relativ groß ist. Der Fachmann wird dies im Einzelfall nach Abwägung der jeweiligen Kosten entscheiden.

In einer alternativen Ausgestaltung ist daher vorgesehen, dass nach dem Abzweig des Teilstroms eine Druckminderung und die Strippung unter geringerem Druck erfolgt. Dies hat den Vorteil, dass bei gleichem Volumenstrom eine geringere Menge an Strippgas benötigt wird und dieses auch nicht so hoch komprimiert werden muss, was bei Verwendung von Luft als Strippgas von Vorteil ist. Die Druckerhöhungspumpe ist dann vor der Zusammenführung zum Ausgleich der flüssigkeitsseitigen Druckverluste einschließlich der Druckminderung bis zur anschließenden Zusammenführung mit dem Hauptstrom vorgesehen.

Weitere Ausgestaltungen betreffen den Strippbehälter. Im Gegensatz zum Stand der Technik im Trinkwasserbereich wird keine Wassersäule verwendet, die von Gasblasen durchströmt wird, sondern eine Strippkolonne, die von einer kontinuierlichen Gasphase und einer heterogenen Flüssigphase durchströmt wird, vorzugsweise im Gegenstrom, eine Durchströmung im Gleichstrom ist ebenfalls möglich. Sofern die Durchströmung des Strippgases im Gleichstrom erfolgen soll, sind die Aufgaben für Strippluft nicht im unteren, sondern im oberen Bereich der Strippkolonne und der Abzug im unteren Bereich der Strippkolonne durchzuführen.

Im Kopfbereich der Strippkolonne ist als Aufgabevorrichtung für Wärmeträgerfluid dann ein Flüssigkeitsverteiler mit Tropfen oder Flüssigkeitsstrahlen erzeugenden Düsen vorgesehen. Im einfachsten Fall entspricht die Aufgabevorrichtung einem handelsüblichen Duschkopf, wobei darauf zu achten ist, dass der Anteil feiner Tropfen möglichst klein ist, damit vom Gasstrom kein Tröpfchenüberriss stattfindet, der eines zusätzlichen Tröpfchenabscheiders bedarf.

Die Strippkolonne ist vorzugsweise mit einer strukturierten Packung ausgestattet, um eine ideale Kontaktfläche für Gas und Flüssigkeit bereitzustellen, aus Kostengründen kann auch eine Füllkörperschüttung verwendet werden.

Im unteren Bereich der Strippkolonne erfolgen eine Strippgaszugabe und der Flüssigkeitsabzug. Vorzugsweise erfolgt dies durch einen Glockenboden mit einer oder mehreren Glocken, wobei die Flüssigkeit seitlich abgezogen wird. Um ein Ausbrechen des Gases durch den Flüssigkeitsabzug zu unterbinden, ist ein Siphon im Flüssigkeitsabzug vorzusehen, wenn dies durch die Aufstellung nicht implizit gegeben ist.

Die Abscheidung von Restgas findet durch einen üblichen automatischen Entlüfter nach bekanntem Stand der Technik statt.

Die Erfindung betrifft auch ein Strippverfahren, welches in einer Vorrichtung, wie oben beschrieben, durchgeführt wird. Hierbei ist vorgesehen, dass
- mit Alkanen beladenes wässriges Wärmeträgerfluid einer Strippkolonne oben zugeführt und im Gegenstrom oder Gleichstrom mit einem Strippgas in Kontakt gebracht wird, wodurch dieses Strippgas mit den abgestrippten Alkanen beladen wird,
- das mit Alkanen beladene Strippgas aus der Strippkolonne abgezogen wird,
- das von Alkanen befreite, aber mit Strippgas gesättigte Wärmeträgerfluid aus der Strippkolonne abgezogen und in den automatischen Heizkreisentlüfter geleitet wird,
- im automatischen Heizkreisentlüfter das im Wärmeträgerfluid enthaltene Strippgas abgeschieden und entlüftet wird.

In einer bevorzugten Ausgestaltung ist vorgesehen, dass das Wärmeträgerfluid über eine Verteileinrichtung in Abwärtsrichtung gegen einen in Aufwärtsrichtung geführten Strippgasstrom geführt wird, wobei die Volumenströme ungefähr gleich sind und um nicht mehr als 30 Prozent voneinander abweichen. Auf diese Weise wird eine Ungleichverteilung der Flüssigkeitsaufgabe auf der einen Seite und ein Tröpfchenüberriss auf der Strippgasseite verhindert.

In einer bevorzugten Ausführungsform des Verfahrens wird als Strippgas Stickstoff verwendet, um die Entzündlichkeit des abgeschiedenen Arbeitsfluids sicher zu verhindern und gleichzeitig einen Eintrag von Luft in das Kreislaufsystem des Wärmeträgerfluids mit entsprechender Korrosionsgefahr zu vermeiden. Sofern Stickstoff unter Druck vorliegt, kann auf eine Entspannung des Stickstoffs vor seiner Verwendung als Strippgas verzichtet werden, was Vereisungsprobleme bei der Stickstoffzugabe deutlich mildert. Diese Variante ist vor allem sinnvoll, wenn das Verfahren in einer mobilen Variante zum Einsatz kommen soll.

In einer anderen Ausführungsform ist vorgesehen, dass als Strippgas Luft verwendet wird. Dies ist besonders dann sinnvoll, wenn die Strippung ständig oder in regelmäßigen Intervallen durchgeführt wird. Um die Bildung eines explosiven Gemisches sicher zu vermeiden, ist das Abgas dann an einen sicheren Ort abzuführen und es ist mit einem hohen Luftüberschuss bezüglich der Explosionsgrenzen zu betreiben. Hierzu können die Abgasströme aus der Strippkolonne und die Entlüfterabluft aus dem automatischen Heizkreisentlüfter zusammengeführt und zusammen an einen sicheren Ort abgeleitet werden.

In weiteren Ausgestaltungen wird vorgesehen, dass ein Teilstrom des Wärmeträgerfluidumlaufs abgezweigt und der Strippung unterzogen wird, und anschließend dem Hauptstrom des Wärmeträgerfluidumlaufs wieder zugeführt wird. Hierbei kann der Druck des abgezweigten Teilstroms nach dem Abzweig auf einen Druck zwischen dem Atmosphärendruck und dem Druck des Wärmeträgerfluidumlaufs reduziert werden und nach Durchströmen des automatischen Heizkreisentlüfters wieder auf den Druck des Wärmeträgerfluidumlaufs erhöht werden.

Hierbei kann auch vorgesehen werden, dass die Abzweigung des Teilstroms nur temporär und im Bedarfsfall eingeschaltet wird. Dies kann auch mittels eines mobilen Gerätes während Wartungsvorgängen vorgenommen werden.

Die Erfindung wird nachfolgend anhand von drei Prinzipskizzen näher erläutert. Hierbei zeigen:
Fig. 1 eine Strippvorrichtung für ständigen Betrieb,
Fig. 2 eine Strippvorrichtung für einen Bypass-Betrieb unter Druck,
Fig. 3 eine Strippvorrichtung für einen drucklosen Bypass-Betrieb.

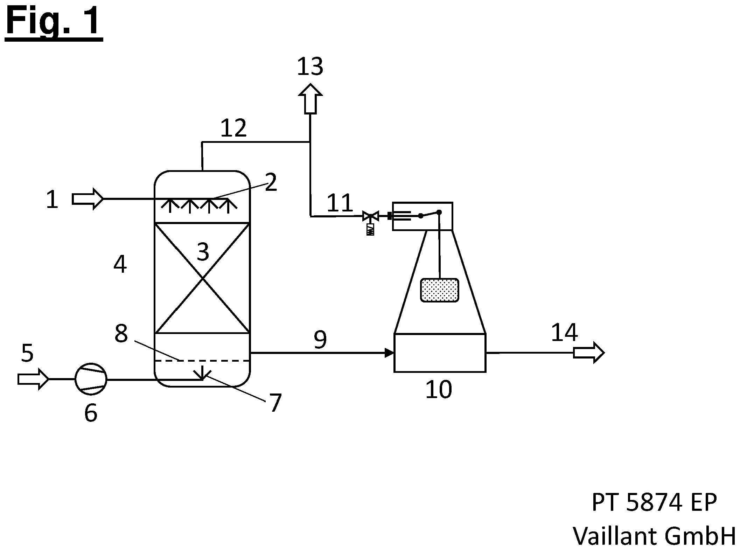

Fig. 1 zeigt eine Strippvorrichtung mit einem Wärmeträgerfluid-Zulauf 1, einer Eindüsung 2 von Wärmeträgerfluid auf eine Packung 3 im Strippbehälter 4, ein Strippgas 5 mit einem Kompressor 6 und einer Strippgaszugabe 7, ferner einem Siebboden 8 und einem Wärmeträgerfluid-Abzug 9. Das abgezogene Wärmeträgerfluid wird nachfolgend in einem automatischen Heizkreisentlüfter 10 von Gasresten befreit, die Entlüfterabluft wird mit dem Strip-Abgas 12 gemischt und als Abgas ins Freie geleitet. Der gasfreie Wärmeträgerfluid-Abstrom 14 wird im Wärmeträgerfluid-Kreislauf weiter in üblicher Weise genutzt.

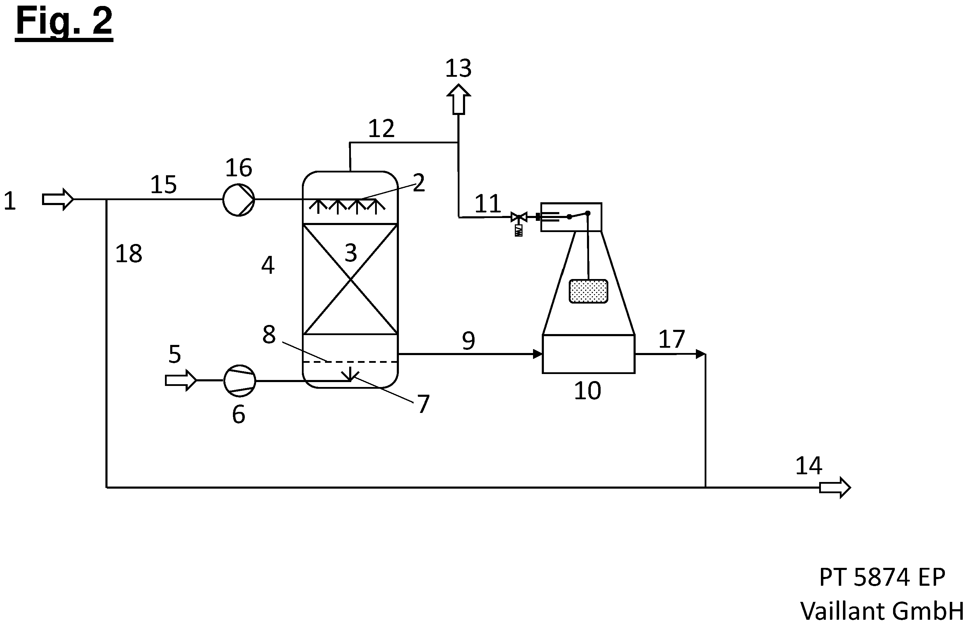

Fig. 2 zeigt eine Strippvorrichtung für einen Bypass-Betrieb unter Druck, bei der der Wärmeträgerfluid-Zulauf 1 in einen Wärmeträgerfluid-Abzweig 15 und eine Wärmeträgerfluid-Hauptstrom 18 aufgeteilt wird. Um die Druckverluste auszugleichen, wird eine Druckerhöhungspumpe 16 vorgesehen. Die Eindüsung 2 und die übrigen Einrichtungen sind mit denen in Fig. 1 identisch. Der aus dem automatischen Heizkreisentlüfter 10 abgezogene Wärmeträgerfluid-Abstrom 17 wird mit dem Wärmeträgerfluid-Hauptstrom 18 zusammengeführt.

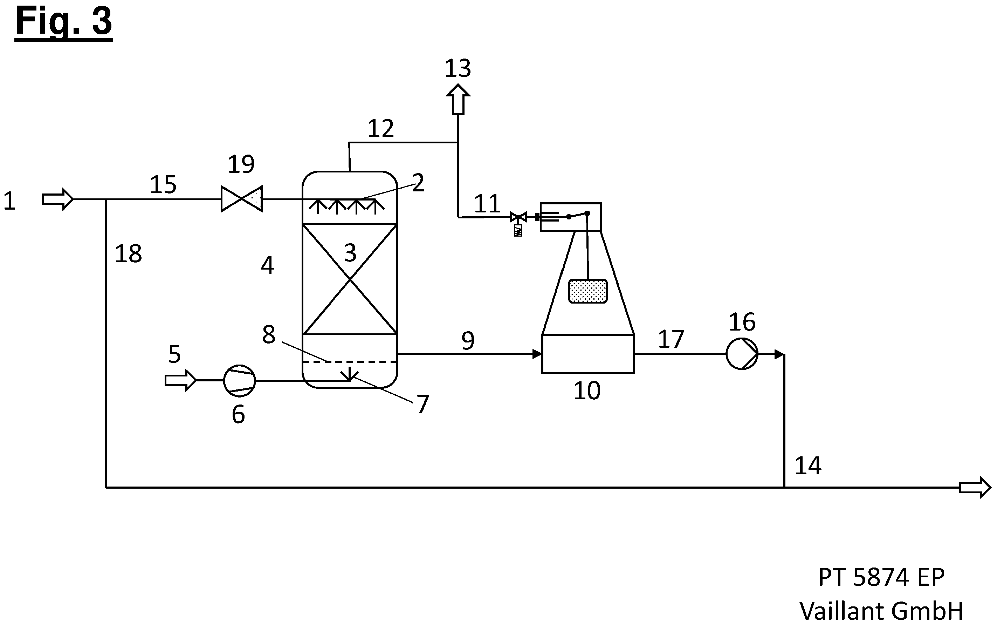

Fig. 3 zeigt eine Strippvorrichtung für einen drucklosen Bypass-Betrieb, bei der wie in Fig. 2 der Wärmeträgerfluid-Zulauf 1 in einen Wärmeträgerfluid Abzweig 15 und eine Wärmeträgerfluid-Hauptstrom 18 aufgeteilt wird. Nach dem Abzweig 15 wird der Druck des Wärmeträgerfluids mittels der Druckminderungseinrichtung (19) abgesenkt auf einen Wert, der für die Eindüsung 2 erforderlich ist, nicht jedoch auf einen Wert unter Atmosphärendruck. Die Eindüsung 2 und die übrigen Einrichtungen sind mit denen in Fig. 1 identisch. Der aus dem Entlüfter abgezogene Wärmeträgerfluid-Abstrom 17 wird mit der Druckerhöhungspumpe 16 auf den Druck des Wärmeträgerfluid-Hauptstroms 18 gebracht mit ihm zusammengeführt.

Hierbei ist klar, dass die in Fig. 2 und 3 gezeigten Varianten auch miteinander kombiniert werden können, also in einer druckreduzierten, aber nicht drucklosen Betriebsweise ausgeführt werden können, ferner in einer mobilen Version, und ohne Kompressor 6, wenn das Strippgas bereits unter Druck vorliegt, etwa in einer Druckkartusche. Nicht gezeigt sind Varianten der Zugabe und Abführung der Fluide sowie Siphons und Armaturen, die der Fachmann im Einzelfall entsprechend ergänzt.

### Bezugszeichenliste

- 1: Wärmeträgerfluid-Zulauf
- 2: Eindüsung
- 3: Packung
- 4: Strippbehälter
- 5: Strippgas
- 6: Kompressor
- 7: Strippgaszugabe
- 8: Siebboden / Glockenboden
- 9: Wärmeträgerfluid-Abzug
- 10: Automatischer Heizkreisentlüfter
- 11: Entlüfterabluft
- 12: Stripp-Abgas
- 13: Abgas
- 14: Wärmeträgerfluid-Abstrom
- 15: Wärmeträgerfluid-Abzweig
- 16: Druckerhöhungspumpe
- 17: Wärmeträgerfluid-Abstrom
- 18: Wärmeträgerfluid-Hauptstrom
- 19: Druckminderungseinrichtung

## Patentansprüche

1. Strippvorrichtung für ein wässriges Wärmeträgerfluid der Klima-Heizungs-Lüftungstechnik, aufweisend
- einen Behälter (4) mit zwei Anschlüssen für einen ein Wärmeträgerfluid-führenden Kreislauf,
- Mittel zum Abscheiden von Gasblasen (3) und Trennung von Gasbestandteilen und Wärmeträgerfluid unter Zurückhaltung der Flüssigkeit im Wärmeträgerfluid-führenden Kreislauf, aus diesem Wärmeträgerfluid,
- ferner mindestens einen Abzug für abgeschiedene Gasbestandteile (12),
- eine Zugabevorrichtung (7) für Strippgas vorgesehen ist,
- ein Abzug für Strippgas (12) vorgesehen ist,
wobei
- im oberen Bereich des Behälters (4) eine Aufgabevorrichtung (2) für Wärmeträgerfluid vorgesehen ist,
- im unteren Bereich des Behälters (4) eine Auffangvorrichtung (8) für Wärmeträgerfluid vorgesehen ist,
- die Auffangvorrichtung (8) für Wärmeträgerfluid mit einem Abzug für Wärmeträgerfluid (9) aus dem Behälter (4) verbunden ist,
**dadurch gekennzeichnet, dass**
- der Abzug für Wärmeträgerfluid (9) aus dem Behälter (4) mit einem automatischen Heizkreisentlüfter (10) verbunden ist,
- wobei der automatische Heizkreisentlüfter (10) mit einem Luftabzug (11) verbunden ist.

2. Strippvorrichtung nach Anspruch 1, **dadurch gekennzeichnet, dass** der Luftabzug (11) und der Abzug für Strippgas (12) zusammengeführt werden.

3. Strippvorrichtung nach Anspruch 1, **dadurch gekennzeichnet, dass** aus dem Hauptstrom des Wärmeträgerfluids (1) eine Leitung für einen Teilstrom (15) abgezweigt wird und im Anschluss an den Strippvorgang wieder mit der Leitung des Hauptstroms (18) des Wärmeträgerfluids zusammengeführt wird.

4. Strippvorrichtung nach Anspruch 3, **dadurch gekennzeichnet, dass** nach dem Abzweig des Teilstroms (15) eine Druckerhöhungspumpe (16) vorgesehen wird, die die flüssigkeitsseitigen Druckverluste bis zur anschließenden Zusammenführung mit dem Hauptstrom des Wärmeträgerfluids ausgleicht.

5. Strippvorrichtung nach Anspruch 3, **dadurch gekennzeichnet, dass** nach dem Abzweig des Teilstroms (15) eine Druckminderungseinrichtung (19) und eine Druckerhöhungspumpe (16) vor der Zusammenführung zum Ausgleich der flüssigkeitsseitigen Druckverluste bis zur anschließenden Zusammenführung mit dem Hauptstrom des Wärmeträgerfluids vorgesehen sind.

6. Strippvorrichtung nach einem der Ansprüche 1 bis 5, **dadurch gekennzeichnet, dass** als Aufgabevorrichtung (2) für Wärmeträgerfluid ein Flüssigkeitsverteiler mit Tropfen oder Flüssigkeitsstrahlen erzeugenden Düsen verwendet wird.

7. Strippvorrichtung nach einem der Ansprüche 1 bis 6, **dadurch gekennzeichnet, dass** im Behälter eine strukturierte Packung (3) als Stoffaustauschfläche eingesetzt ist.

8. Strippvorrichtung nach einem der Ansprüche 1 bis 7, **dadurch gekennzeichnet, dass** als Zugabevorrichtung für Strippgas (7) und als Auffangvorrichtung für Wärmeträgerfluid ein Glockenboden (8) verwendet wird.

9. Verfahren zur Abscheidung alkanhaltiger entzündlicher Gase aus einem wässrigen Wärmeträgerfluid in einem wässrigen Heizungskreislauf oder Kühlsolekreislauf mittels einer Strippung in einer kombinierten Strippvorrichtung entsprechend Anspruch 1, wobei die Strippvorrichtung umfasst
- einen Behälter (4) mit zwei Anschlüssen für einen ein Wärmeträgerfluid-führenden Kreislauf,
- Mittel zum Abscheiden von Gasblasen (3) und Trennung von Gasbestandteilen und Wärmeträgerfluid unter Zurückhaltung der Flüssigkeit im Wärmeträgerfluid-führenden Kreislauf, aus diesem Wärmeträgerfluid,
- ferner mindestens einen Abzug für abgeschiedene Gasbestandteile (12),
- eine Zugabevorrichtung (7) für Strippgas vorgesehen ist,
- ein Abzug für Strippgas (12) vorgesehen ist,
**wobei**
- iim oberen Bereich des Behälters (4) eine Aufgabevorrichtung (2) für Wärmeträgerfluid vorgesehen ist,
- im unteren Bereich des Behälters (4) eine Auffangvorrichtung (8) für Wärmeträgerfluid vorgesehen ist,
- die Auffangvorrichtung (8) für Wärmeträgerfluid mit einem Abzug für Wärmeträgerfluid (9) aus dem Behälter (4) verbunden ist,
- der Abzug für Wärmeträgerfluid (9) aus dem Behälter (4) mit einem automatischen Heizkreisentlüfter (10) verbunden ist,
- wobei der automatische Heizkreisentlüfter (10) mit einem Luftabzug (11) verbunden ist,
- mit Alkanen beladenes wässriges Wärmeträgerfluid einer Strippkolonne oben zugeführt und im Gegenstrom oder Gleichstrom mit einem Strippgas in Kontakt gebracht wird, wodurch dieses Strippgas mit den abgestrippten Alkanen beladen wird,
- das mit Alkanen beladene Strippgas (12) aus der Strippkolonne abgezogen wird,
- das von Alkanen befreite, aber mit Strippgas gesättigte Wärmeträgerfluid (9) aus der Strippkolonne abgezogen und in den automatischen Heizkreisentlüfter (10) geleitet wird,
- im automatischen Heizkreisentlüfter (10) die im Wärmeträgerfluid enthaltene Entlüfterabluft (11) abgeschieden und entlüftet wird.

10. Verfahren nach Anspruch 9, **dadurch gekennzeichnet, dass** das Wärmeträgerfluid über eine Verteileinrichtung in Abwärtsrichtung gegen einen in Aufwärtsrichtung geführten Strippgasstrom geführt wird, wobei die Volumenströme ungefähr gleich sind und um nicht mehr als 30 Prozent voneinander abweichen.

11. Verfahren nach Anspruch 9, **dadurch gekennzeichnet, dass** als Strippgas Stickstoff verwendet wird.

12. Verfahren nach Anspruch 9, **dadurch gekennzeichnet, dass** als Strippgas Luft verwendet wird.

13. Verfahren nach Anspruch 12, **dadurch gekennzeichnet, dass** das aus der Strippkolonne abgezogene beladene Strippgas und das aus dem automatischen Heizkreisentlüfter abgezogene Strippgas zusammengeführt und an einen sicheren Ort abgeleitet werden.

14. Verfahren nach einem der Ansprüche 9 bis 13, **dadurch gekennzeichnet, dass** ein Teilstrom des Wärmeträgerfluidumlaufs abgezweigt und der Strippung unterzogen wird, und anschließend dem Hauptstrom des Wärmeträgerfluidumlaufs wieder zugeführt wird.

15. Verfahren nach Anspruch 14, **dadurch gekennzeichnet, dass** der Druck des abgezweigten Teilstroms nach dem Abzweig auf einen Druck zwischen dem Atmosphärendruck und dem Druck des Wärmeträgerfluidumlaufs reduziert wird und nach Durchströmen des automatischen Heizkreisentlüfters wieder auf den Druck des Wärmeträgerfluidumlaufs erhöht wird.

16. Verfahren nach einem der Ansprüche 14 oder 15, **dadurch gekennzeichnet, dass** die Abzweigung des Teilstroms nur temporär im Bedarfsfall eingeschaltet wird.

## Claims

1. Stripping device for an aqueous heat transfer fluid for air conditioning, heating and ventilation technology, comprising
- a tank (4) with two connections for a circuit carrying a heat transfer fluid,
- Means for separating gas bubbles (3) and separating gas components and heat transfer fluid while retaining the liquid in the circuit carrying the heat transfer fluid, from this heat transfer fluid,
- furthermore at least one outlet for separated gas components (12),
- an addition device (7) for stripping gas is provided,
- an outlet for stripping gas (12) is provided,
whereby
- a feeding device (2) for heat transfer fluid is provided in the upper area of the container (4),
- a collecting device (8) for heat transfer fluid is provided in the lower area of the container (4),
- the collecting device (8) for heat transfer fluid is connected to an outlet for heat transfer fluid (9) from the container (4),
**characterised in that**
- the outlet for heat transfer fluid (9) from the tank (4) is connected to an automatic heating circuit deaerator (10),
- wherein the automatic heating circuit ventilator (10) is connected to an air extractor (11).

2. Stripping device according to claim 1, **characterised in that** the air outlet (11) and the outlet for stripping gas (12) are brought together.

3. Stripping device according to claim 1, **characterised in that** a line for a partial flow (15) is branched off from the main flow of the heat transfer fluid (1) and, following the stripping process, is rejoined with the line of the main flow (18) of the heat transfer fluid

4. Stripping device according to claim 3, **characterised in that** a booster pump (16) is provided after the branch of the partial flow (15), which compensates for the pressure losses on the liquid side until the subsequent merging with the main flow of the heat transfer fluid.

5. Stripping device according to claim 3, **characterised in that** a pressure reducing device (19) and a booster pump (16) are provided after the branch of the partial flow (15) before the merging for compensating the pressure losses on the liquid side until the subsequent merging with the main flow of the heat transfer fluid.

6. Stripping device according to one of claims 1 to 5, **characterised in that** a liquid distributor with nozzles producing droplets or jets of liquid is used as the feeding device (2) for heat transfer fluid.

7. Stripping device according to one of claims 1 to 6, **characterised in that** a structured packing (3) is used in the container as a mass transfer surface.

8. Stripping device according to one of claims 1 to 7, **characterised in that** a bell bottom (8) is used as a supply device for stripping gas (7) and as a collecting device for heat transfer fluid.

9. A process for separating alkane-containing flammable gases from an aqueous heat transfer fluid in an aqueous heating circuit or cooling brine circuit by means of stripping in a combined stripping apparatus according to claim 1, wherein the stripping apparatus comprises
- a tank (4) with two connections for a circuit carrying a heat transfer fluid,
- Means for separating gas bubbles (3) and separating gas components and heat transfer fluid while retaining the liquid in the circuit carrying the heat transfer fluid, from this heat transfer fluid,
- furthermore at least one outlet for separated gas components (12),
- an addition device (7) for stripping gas is provided,
- an outlet for stripping gas (12) is provided,
**whereby**
- a feeding device (2) for heat transfer fluid is provided in the upper area of the container (4),
- a collecting device (8) for heat transfer fluid is provided in the lower area of the container (4),
- the collecting device (8) for heat transfer fluid is connected to an outlet for heat transfer fluid (9) from the container (4),
- the outlet for heat transfer fluid (9) from the tank (4) is connected to an automatic heating circuit deaerator (10),
- wherein the automatic heating circuit ventilator (10) is connected to an air extractor (11),
- aqueous heat transfer fluid loaded with alkanes is fed to the top of a stripping column and brought into contact with a stripping gas in countercurrent or cocurrent flow, whereby this stripping gas is loaded with the stripped alkanes,
- the stripping gas (12) loaded with alkanes withdrawn from the stripping column,
- the heat transfer fluid (9), which is free of alkanes but saturated with stripping gas, is drawn off from the stripping column and fed into the automatic heating circuit deaerator (10),
- the deaerator exhaust air (11) contained in the heat transfer fluid is separated and deaerated in the automatic heating circuit deaerator (10).

10. Method according to claim 9, **characterised in that** the heat transfer fluid is via a distribution device in the downward direction against a stripping gas flow guided in the upward direction, the volume flows being approximately equal and differing from one another by no more than 30 percent.

11. Method according to claim 9, **characterised in that** nitrogen is used as the stripping gas.

12. Method according to claim 9, **characterised in that** air is used as the stripping gas.

13. Method according to claim 12, **characterised in that** the loaded stripping gas drawn off from the stripping column and the stripping gas drawn off from the automatic heating circuit deaerator are brought together and discharged to a safe location.

14. Method according to one of claims 9 to 13, **characterised in that** a partial flow of the heat transfer fluid circulation is branched off and subjected to stripping, and is then fed back into the main flow of the heat transfer fluid circulation.

15. Method according to claim 14, **characterised in that** the pressure of the branched partial flow after the branch is reduced to a pressure between the atmospheric pressure and the pressure of the heat transfer fluid circulation and is increased again to the pressure of the heat transfer fluid circulation after flowing through the automatic heating circuit deaerator.

16. Method according to one of claims 14 or 15, **characterised in that** the branching of the partial flow is only switched on temporarily when required.

## Revendications

1. Dispositif de strippage pour un fluide caloporteur aqueux de la technique de climatisation, chauffage et ventilation, présentant
- un récipient (4) avec deux raccords pour un circuit transportant un fluide caloporteur,
- des moyens de séparation de bulles de gaz (3) et d'isolation de composants gazeux et de fluide caloporteur en retenant le liquide dans le circuit transportant du fluide caloporteur à partir de ce fluide caloporteur,
- au moins en outre un extracteur de composants gazeux séparés (12),
- un dispositif d'addition (7) de gaz de strippage est prévu,
- un extracteur de gaz de strippage (12) est prévu,
dans lequel
- un dispositif d'alimentation (2) de fluide caloporteur est prévu dans la partie supérieure du récipient (4),
- un dispositif de collecte (8) de fluide caloporteur est prévu dans la zone inférieure du récipient (4),
- le dispositif de collecte (8) de fluide caloporteur est connecté à un extracteur de fluide caloporteur (9) hors du récipient (4),
**caractérisé en ce que**
- l'extracteur de fluide caloporteur (9) hors du réservoir (4) est connecté à un purgeur de circuit de chauffage automatique (10),
- dans lequel le purgeur de circuit de chauffage automatique (10) est connecté à un extracteur d'air (11).

2. Dispositif de strippage selon la revendication 1, **caractérisé en ce que** l'extracteur d'air (11) et l'extracteur de gaz de strippage (12) sont regroupés.

3. Dispositif de strippage selon la revendication 1, **caractérisé en ce qu'**une conduite pour un courant partiel (15) est dérivée du courant principal du fluide caloporteur (1) et est à nouveau regroupée avec la conduite du courant principal (18) du fluide caloporteur suite à l'opération de strippage.

4. Dispositif de strippage selon la revendication 3, **caractérisé en ce qu'**après la dérivation du courant partiel (15), une pompe d'augmentation de pression (16) qui compense les pertes de pression côté liquide jusqu'au regroupement ultérieur avec le courant principal du fluide caloporteur est prévue.

5. Dispositif de strippage selon la revendication 3, **caractérisé en ce qu'**après la dérivation du courant partiel (15), un appareil de réduction de pression (19) et une pompe d'augmentation de pression (16) sont prévus avant le regroupement pour compenser les pertes de pression côté liquide jusqu'au regroupement ultérieur avec le courant principal du fluide caloporteur.

6. Dispositif de strippage selon l'une quelconque des revendications 1 à 5, **caractérisé en ce qu'**un distributeur de liquide avec des buses produisant des gouttes ou des jets de liquide est utilisé en tant que dispositif d'alimentation (2) en fluide caloporteur.

7. Dispositif de strippage selon l'une quelconque des revendications 1 à 6, **caractérisé en ce qu'**une garniture structurée (3) est utilisée en tant que surface d'échange de substance dans le récipient.

8. Dispositif de strippage selon l'une quelconque des revendications 1 à 7, **caractérisé en ce qu'**un fond de cloche (8) est utilisé en tant que dispositif d'addition de gaz de strippage (7) et en tant que dispositif de collecte de fluide caloporteur.

9. Procédé de séparation de gaz inflammables contenant des alcanes à partir d'un fluide caloporteur aqueux dans un circuit de chauffage ou circuit de saumure de refroidissement aqueux au moyen d'un strippage dans un dispositif de strippage combiné selon la revendication 1, dans lequel le dispositif de strippage comprend
- un récipient (4) avec deux raccords pour un circuit transportant un fluide caloporteur,
- des moyens de séparation des bulles de gaz (3) et d'isolation de composants gazeux et de fluide caloporteur en retenant le liquide dans le circuit transportant du fluide caloporteur à partir de ce fluide caloporteur,
- au moins en outre un extracteur de composants gazeux séparés (12),
- un dispositif d'addition (7) de gaz de strippage est prévu,
- un extracteur de gaz de strippage (12) est prévu,
**dans lequel**
- un dispositif d'alimentation (2) de fluide caloporteur est prévu dans la partie supérieure du récipient (4),
- un dispositif de collecte (8) de fluide caloporteur est prévu dans la zone inférieure du récipient (4),
- le dispositif de collecte (8) de fluide caloporteur est connecté à un extracteur de fluide caloporteur (9) hors du récipient (4),
- l'extracteur de fluide caloporteur (9) hors du réservoir (4) est connecté à un purgeur de circuit de chauffage automatique (10),
- dans lequel le purgeur de circuit de chauffage automatique (10) est connecté à un extracteur d'air (11),
- du fluide caloporteur aqueux chargé d'alcanes est amené en haut d'une colonne de strippage et mis en contact à contre-courant ou dans le même sens avec un gaz de strippage, moyennant quoi ce gaz de strippage est chargé avec les alcanes strippés,
- le gaz de strippage (12) chargé d'alcanes est extrait de la colonne de strippage,
- le fluide caloporteur (9) libéré d'alcanes, mais saturé de gaz de strippage, est extrait de la colonne de strippage et conduit dans le purgeur de circuit de chauffage automatique (10),
- l'air d'extracteur (11) contenu dans le fluide caloporteur est séparé et purgé dans le purgeur de circuit de chauffage automatique (10).

10. Procédé selon la revendication 9, **caractérisé en ce que** le fluide caloporteur est guidé par l'intermédiaire d'un appareil de distribution en direction descendante contre un flux de gaz de strippage guidé en direction ascendante, dans lequel les débits volumétriques sont environ égaux et ne diffèrent pas de plus de 30 pour cent les uns des autres.

11. Procédé selon la revendication 9, **caractérisé en ce que** de l'azote est utilisé en tant que gaz de strippage.

12. Procédé selon la revendication 9, **caractérisé en ce que** de l'air est utilisé en tant que gaz de strippage.

13. Procédé selon la revendication 12, **caractérisé en ce que** le gaz de strippage chargé extrait de la colonne de strippage et le gaz de strippage extrait du purgeur de circuit de chauffage automatique sont regroupés et évacués vers un lieu sûr.

14. Procédé selon l'une quelconque des revendications 9 à 13, **caractérisé en ce qu'**un courant partiel du circuit de fluide caloporteur est dérivé et soumis au strippage, puis ramené dans le courant principal du circuit de fluide caloporteur.

15. Procédé selon la revendication 14, **caractérisé en ce que** la pression du courant partiel dérivé est réduite après la dérivation à une pression entre la pression atmosphérique et la pression du circuit de fluide caloporteur et est à nouveau augmentée à la pression du circuit de fluide caloporteur après avoir traversé le purgeur de circuit de chauffage automatique.

16. Procédé selon l'une quelconque des revendications 14 ou 15, **caractérisé en ce que** la dérivation du courant partiel n'est activée que temporairement en cas de besoin.
